# EUROPEAN PATENT APPLICATION

(11) **EP 3 611 687 A1**
(43) Date of publication of application: **19.02.2020**
(21) Application number: 18784050.9
(22) Date of filing: 13.04.2018
(51) Int. Cl.: G06Q 30/06

(54) **PROGRAM, RECORDING MEDIUM, INFORMATION PROCESSING METHOD, AND INFORMATION PROCESSING DEVICE**

(30) Priority: 14.04.2017 JP 2017080601
(71) Applicant: Spiber Inc., Yamagata 997-0052 (JP)
(72) Inventor: SEKIYAMA Kazuhide, Tsuruoka-shi Yamagata 997-0052 (JP); UHIRA Goshi, Tsuruoka-shi Yamagata 997-0052 (JP)
(74) Representative: Plougmann Vingtoft a/s
(86) International application number: PCT/JP2018/015459
(87) International publication number: WO 2018/190406

(57) **Abstract**

In an information processing apparatus, a display control part 31 causes a display part to display one or more human models in which parameters relating to shapes and sizes are set. A model selection reception part receives, from a user, a selection operation for selecting one human model from the one or more human models. A parameter changing part 34 changes the parameters set for the human model in conjunction with a change operation from the user for the selected human model.

## Description

### TECHNICAL FIELD

The present invention relates to a program, a storage medium, an information processing method, and an information processing apparatus, in particular, to a technique for receiving an order for a garment online.

### BACKGROUND OF THE INVENTION

Conventionally, a technique that receives body measurements of a consumer and compares the consumer's usual size with the sizes determined by a garment's manufacturer in order to select the garment most likely to fit the consumer is disclosed.

### PRIOR ART

### PATENT DOCUMENT

Patent Document 1: United Sates Patent Publication No. 2006/0287877

### SUMMARY OF INVENTION

### PROBLEMS TO BE SOLVED BY THE INVENTION

According to the technique described above, consumers can increase the possibility of finding garments that fit their own body dimensions. However, there are wide variations in consumers' body dimensions and shapes, and size preferences of garments may vary from wearer to wearer. For this reason, it is still difficult to accurately convey size information, including preferences, to a garment manufacturer.

The present invention focuses on this point, and an object of the invention is to provide a technique for improving the accuracy of body shape information transmitted to the manufacturer by an orderer of a garment.

### MEANS FOR SOLVING THE PROBLEMS

The first aspect of the present invention is a program. The program causes a computer to implement: a display control function that causes a display part to display one or more human models in which parameters relating to shapes and sizes are set; a model selection reception function that receives, from a user, a selection operation for selecting one human model from the one or more human models; and a parameter changing function that changes the parameters set for the human model in conjunction with a change operation from the user for the selected human model.

Each of the human models may include a plurality of parts, the program may cause the computer to further implement a part selection reception function that receives, from the user, a selection operation for selecting a specific part from the plurality of parts, and the parameter changing function may change the parameters set for the specific part in conjunction with the change operation from the user for the selected specific part.

The display control function may display the human model with the changed specific part on the display part while continuously changing the shapes or sizes of the specific part of the human model in conjunction with the change of the parameters by the parameter changing function.

The program may further cause the computer to implement an operation area display function that causes the display part to display an operation area for receiving the change operation.

The program may further cause the computer to implement an object display function that causes the display part to display (i) a first object extending through the operation area and (ii) a second object moving on the first object in accordance with an operation of the user, wherein the parameter changing function may change the parameters on the basis of an amount and a direction of displacement of the second object.

The program may further cause the computer to implement a body shape information reception function that receives an input of body shape information indicating a physique of a person associated with the human model, wherein the object display function may set a range in which the second object can move on the basis of the body shape information.

The object display function may cause the display part to further display, in the operation area, a third object extending in a direction different from the direction in which the first object extends and a fourth object moving on the third object in accordance with the operation of the user, and the parameter changing function may change, among the parameters relating to the shapes, (i) a parameter corresponding to the direction of displacement of the second object on the basis of the amount of displacement of the second object, and (ii) a parameter corresponding to the direction of displacement of the fourth object on the basis of the amount of displacement of the fourth object.

The program may further cause the computer to implement an underwear selection reception function that receives a selection of underwear to be worn by the human model, wherein the display control function may cause the display part to display the human model wearing the underwear, and causes the display part to display indicators indicating distances to the respective plurality of parts with reference to edges of the underwear.

The program may further cause the computer to implement: an image acquisition function that acquires image data including a wearer, corresponding to the human model, as a subject; and a parameter setting function that sets the parameters for the human model on the basis of the image data.

The second aspect of the present invention is a computer readable storage medium storing the above-mentioned program.

The third aspect of the present invention is an information processing method. This method performed by a processor includes the steps of: causing a display part to display one or more human models in which parameters relating to shapes and sizes are set; receiving, from a user, a selection operation for selecting one human model from the one or more human models; and changing the parameters set for the human model in conjunction with a change operation from the user for the selected human model.

The fourth aspect of the present invention is an information processing apparatus. This apparatus includes: a display control part that causes a display part to display one or more human models in which parameters relating to shapes and sizes are set; a model selection reception part that receives, from a user, a selection operation for selecting one human model from the one or more human models; and a parameter changing part that changes the parameters set for the human model in conjunction with a change operation from the user for the selected human model.

It should be noted that any combination of the above-described constituent elements, and an aspect obtained by converting the expression of the present invention among methods, devices, systems, computer programs, data structures, recording media, and the like are also effective as an aspect of the present invention.

### EFFECT OF THE INVENTION

According to the present invention, it is possible to improve the accuracy of body shape information transmitted to manufacturers by an orderer of a garment.

### BRIEF DESCRIPTION OF THE DRAWINGS

FIG. 1 is a schematic diagram showing an outline of a garment made-to-order system according to the embodiment.
FIG. 2 is a schematic diagram showing a functional configuration of a garment order reception management apparatus according to the embodiment.
FIG. 3 is a diagram showing an example of a body shape information input screen displayed on a communication terminal according to the embodiment.
FIG. 4 is a schematic diagram showing a functional configuration of a reception part according to the embodiment.
FIG. 5 is a schematic diagram showing a functional configuration of a display control part according to the embodiment.
FIG. 6 is a diagram showing an example of a human model selection screen displayed on the communication terminal according to the embodiment.
FIG. 7 is a diagram showing an example of an underwear selection screen displayed on the communication terminal according to the embodiment.
FIGS. 8A and 8B are each a diagram showing an example of a change operation screen displayed on the communication terminal according to the embodiment.
FIGS. 9A and 9B are each a diagram showing another example of the change operation screen displayed on the communication terminal according to the embodiment.
FIG. 10 is a schematic diagram showing a data structure of a parameter database according to the embodiment.
FIG. 11 is a schematic diagram showing a data structure of a movable range setting database according to the embodiment.
FIG. 12 is a flowchart illustrating an information process executed by the garment order reception management apparatus according to the embodiment.

### DETAILED DESCRIPTION OF THE INVENTION

### <Outline of the Embodiment>

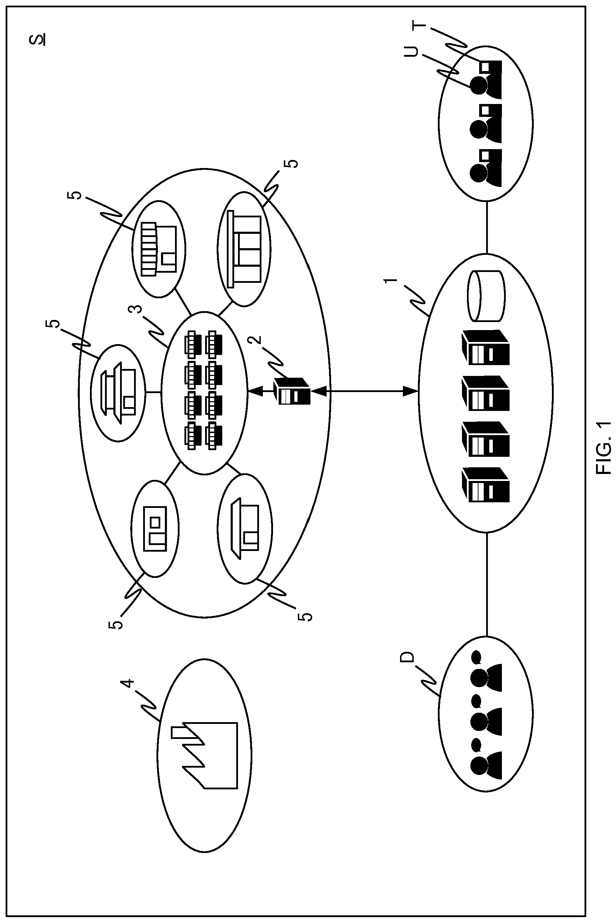

An outline of the embodiment will be explained while referring to FIG. 1. FIG. 1 is a schematic diagram showing an outline of the garment made-to-order system S according to the embodiment. The garment made-to-order system S includes: a garment order reception management apparatus 1, a seamless knitting machine control apparatus 2, a seamless knitting machine 3, a plant 4, and a store 5.

The garment order reception management apparatus 1 communicates with each communication terminal T of a plurality of users U via a network such as the Internet, where the users U are orderers. The garment order reception management apparatus 1 is also connected in a communicable manner to an information terminal of a designer D of garments that the garment order reception management apparatus 1 handles. The garment order reception management apparatus 1 is connected also to the seamless knitting machine control apparatus 2 in a communicable manner.

The garment order reception management apparatus 1 provides the communication terminal T of the user U with a function of creating custom-made garments. The garment order reception management apparatus 1 acquires, from the communication terminal T of the user U, garment information for specifying a garment to be purchased by the user U, and body shape information indicating the physique of the wearer of the garment. Here, the wearer and the user U may be the same, or if the user U places an order for the garment with an intention to let someone other than himself/herself wear it, such as a gift to his/her friend or family member, the wearer and the user U may be different. The body shape information includes not only basic information such as the height, chest circumference, neck circumference, etc., of the wearer, but also information about the wearer's bone structure (e.g., information indicating whether the wearer is big-boned, slim, or the like).

The seamless knitting machine control apparatus 2 can communicate with one or more seamless knitting machines 3 and controls an operation of each seamless knitting machine 3. The seamless knitting machine control apparatus 2 acquires production information for manufacturing the garment which the user U ordered from the garment order reception management apparatus 1. On the basis of the acquired production information of the garment, the seamless knitting machine control apparatus 2 selects a seamless knitting machine 3 to be used for manufacturing that garment. Next, the seamless knitting machine control apparatus 2 transmits the production information to the selected seamless knitting machine 3 and makes the seamless knitting machine 3 manufacture the garment.

The seamless knitting machine 3 is an apparatus that knits the garments on the basis of the production information received from the seamless knitting machine control apparatus 2 and uses, as raw materials, fibers and the like that contain a structural protein and are made in the plant 4. The seamless knitting machine 3 can knit a garment three-dimensionally in one entire piece. When the seamless knitting machine 3 is used for manufacturing a garment, the process of cutting out each part from fabrics and sewing them together (cut-and-sew process) is basically unnecessary. Because no material is discarded due to cutting, the garments that are manufactured by the seamless knitting machine 3 create little waste.

Also, in FIG. 1, the store 5 is a store that provides the garment manufactured by the seamless knitting machine 3 to the user U. A specific example of the store 5 is a laundromat, a convenience store, or various kinds of shopping centers. Another example of the store 5 is a distribution center of a shipping carrier or the like. In the former case, the user U receives the garment over the counter at the store 5. In the latter case, the user U can have the ordered garment delivered to a designated place such as the user U's home.

When placing an order for a garment in the garment order reception management apparatus 1 via a network such as the Internet, the user U cannot try on the garment prior to ordering, unless the user U takes trouble such as obtaining a sample of the garment or the like. Therefore, it is desirable for the user U to transmit the body shape information of the wearer to the garment order reception management apparatus 1 as accurately as possible at the time of ordering. On the other hand, even if accuracy of the body shape information can be realized, if the input of the body shape information at the time of ordering the garment is complicated or takes time to input, that could result in a decline of the user U's willingness to purchase.

Therefore, the garment order reception management apparatus 1 according to the embodiment displays one or more human models in which parameters relating to the shapes and sizes are set on the display part of the communication terminal T of the user U in a so-called graphical user interface (GUI) format. When the user U performs a change operation on the human model in the GUI displayed on the display part of the communication terminal T, the garment order reception management apparatus 1 according to the embodiment changes the parameters set for the human model in conjunction with the change operation from the user U. The user U can accurately transmit the wearer's body shape information to the garment order reception management apparatus 1 in a short time by performing an intuitive operation while viewing the human model displayed on the GUI.

Hereinafter, the garment order reception management apparatus 1 included in the garment made-to-order system S will be described in more detail.

### <Functional configuration of the garment order reception management apparatus 1>

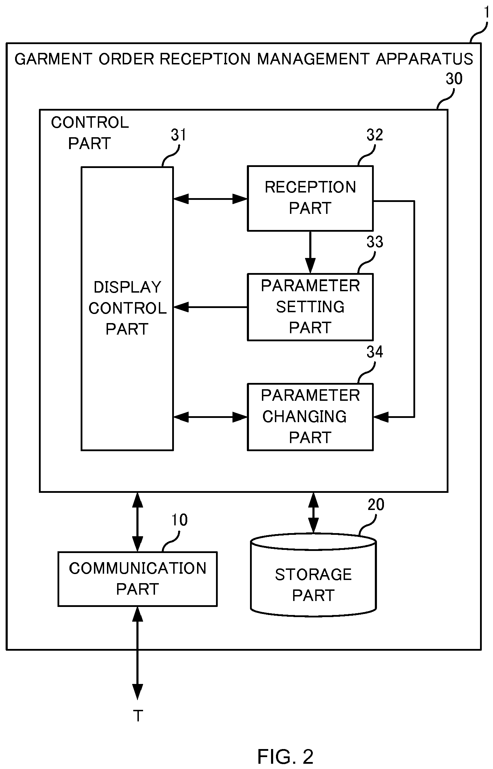

FIG. 2 is a schematic diagram showing a functional configuration of the garment order reception management apparatus 1 according to the embodiment. The garment order reception management apparatus 1 according to the embodiment is realized by calculation resources of cloud computing such as a cloud server. The garment order reception management apparatus 1 includes a communication part 10, a storage part 20, and a control part 30. From the perspective of the communication terminal T of the user U, the garment order reception management apparatus 1 functions as a webserver or a server equivalent thereto that responds to a request of the communication terminal T.

FIG. 2 shows a functional configuration for achieving a process performed between the garment order reception management apparatus 1 and the communication terminal T according to the first embodiment, and other configurations such as a configuration for achieving a process performed between the seamless knitting machine control apparatus 2, for example, are omitted. In FIG. 2, each element mentioned as a functional block performing various procedures may include, in terms of hardware, a central processing unit (CPU), a main memory, and other large scale integration (LSI). Further, in terms of software, various procedures are realized with programs loaded in the main memory or the like. Accordingly, it is understood by those skilled in the art that each functional block may be realized in various forms by hardware only, software only, or a combination thereof, and is not limited to any of them.

The communication part 10 is a communication interface that allows the garment order reception management apparatus 1 to communicate with the communication terminal T of the user U. The communication part 10 is realized by known communication modules, for example, a Wi-Fi (registered trademark) module, a local area network (LAN) module, and the like.

The storage part 20 is a mass-storage device such as a hard disk drive (HDD) or a solid state drive (SSD) that stores (i) a read only memory (ROM) which stores a basic input output system (BIOS) for a computer, and the like that realize the garment order reception management apparatus 1, (ii) a random access memory (RAM) which is a work area of the garment order reception management apparatus 1, (iii) an operating system (OS) and application programs, and (iv) various types of information to be referenced when executing the application programs.

The control part 30 includes a processor such as a CPU or a GPU of the garment order reception management apparatus 1, and functions as a display control part 31, a reception part 32, a parameter setting part 33, and a parameter changing part 34 by executing programs stored in the storage part 20.

Hereinafter, the functional configuration of the garment order reception management apparatus 1 according to the embodiment and the GUI displayed on the display part of the communication terminal T will be described while referring to FIGS. 2 to 11, as appropriate.

The display control part 31 controls the GUI to be displayed on the communication terminal T of the user U. More specifically, the display control part 31 provides the communication part 10 with the GUI for realizing a function of each unit of the control part 30 via the communication terminal T. Hereinafter, each part of the garment order reception management apparatus 1 according to the embodiment displays the GUI on the display part of the communication terminal T via the display control part 31 and the communication part 10, and the descriptions in this regard may be omitted.

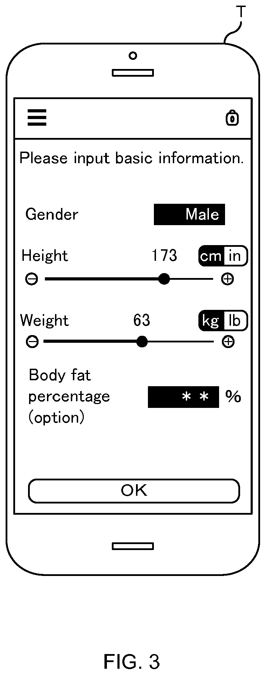

FIG. 3 is a diagram showing an example of a body shape information input screen displayed on the communication terminal T according to the embodiment. On the body shape information input screen, the user U can input basic information regarding the body shape of the wearer of the garment.

In the example shown in FIG. 3, the user U inputs, as the body shape information of the wearer of the garment, "Male" in gender, "173 cm" in height, and "63 kg" in weight. If the user U knows body fat percentage of the wearer, the user U can also input the body fat percentage of the wearer as additional information. Although not shown, the user U may input the body shape information related to bone structure of the wearer via the body shape information input screen. Specifically, the user U may input information indicating whether the wearer is "big-boned," "slim," or "normal."

The height and weight are basic information for determining the body shape of the wearer of the garment. Also, since men and women generally have different body shapes, the gender may also be useful information for determining the body shape of the wearer. Also, the "body fat percentage" of the wearer serves as a clue when estimating how the wearer is physically built. In addition, the "bone structure" of the wearer is useful information for estimating a contour of the wearer. Furthermore, since the proportion of "weight of bone" in the weight of the wearer is large, the "information regarding the bone structure" indicating the weight of bone serves as a clue when estimating how the wearer is physically built.

The reception part 32 receives an operation in the GUI displayed on the communication terminal T of the user U.

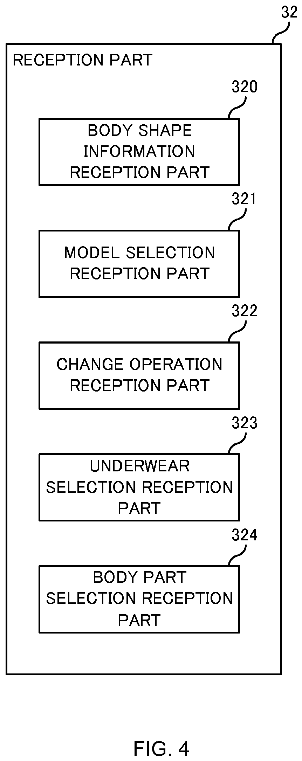

FIG. 4 is a schematic diagram showing a functional configuration of the reception part 32 according to the embodiment. The reception part 32 includes a body shape information reception part 320, a model selection reception part 321, a change operation reception part 322, an underwear selection reception part 323, and a body part selection reception part 324.

The body shape information reception part 320 receives an input of body shape information indicating the physique of the wearer of the garment, which is input by the user U via the body shape information input screen. The parameter setting part 33 sets human model parameters to be displayed on the display part of the communication terminal T on the basis of the body shape information received by the body shape information reception part 320. The display control part 31 generates a human model on the basis of the parameters set by the parameter setting part 33, and displays the human model on the display part of the communication terminal T.

It should be noted that, instead of or in addition to receiving an input of body shape information from the user U via the body shape information input screen, the body shape information reception part 320 may receive image data including the wearer as a subject from the user U. In this instance, the body shape information reception part 320 functions as an image acquisition part for acquiring the image data including the wearer as the subject. This can be realized by, for example, the user U capturing an image of the wearer by a camera function of the communication terminal T and uploading the image to the garment order reception management apparatus 1.

The parameter setting part 33 may estimate the body shape information of the wearer by analyzing the image acquired by the body shape information reception part 320, and may set parameters for a human model. For this reason, the display control part 31 may display, on the display part of the communication terminal T, a message instructing the inclusion of a subject (e.g., a 30-cm ruler or a standard product such as a cover for a household outlet or switches) which serves as a reference length when capturing the image of the wearer. This allows the parameter setting part 33 to estimate the body shape information such as the shape of the wearer's shoulder, the size of each body part of the wearer, and the like on the basis of the subject serving as a reference length.

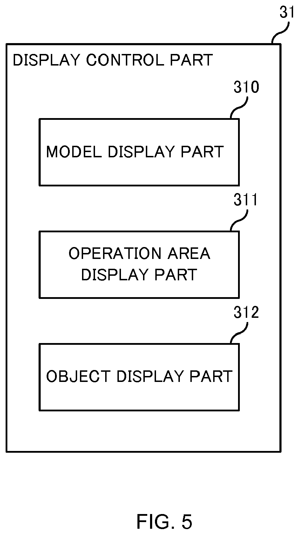

FIG. 5 is a schematic diagram showing a functional configuration of the display control part 31 according to the embodiment. The display control part 31 includes a model display part 310, an operation area display part 311, and an object display part 312.

The model display part 310 generates a human model in which parameters relating to the shapes and sizes are set by the parameter setting part 33. For example, supposing that a parameter for gender is "male", a parameter for height is "173 cm", and a parameter for weight is "63 kg," the model display part 310 generates a human model of a male who is 173 cm tall and weighs 63 kg. That is, the body shape information reception part 320 also functions as a reception part for receiving an input of the body shape information indicating the physique of a person associated with the human model generated by the model display part 310.

Generally, it is difficult for the model display part 310 to accurately specify the body shape of the wearer only with the parameters of the height, weight, and gender. For example, it is difficult to specify bone structure of the wearer or how the wearer is physically built only with the parameters of the height, weight, and gender.

Therefore, the model display part 310 generates several variations of the human model that are consistent with the parameters set on the basis of the body shape information of the wearer which the body shape information reception part 320 received. If the body shape information reception part 320 has received information on the body fat percentage and bone structure, the model display part 310 generates several variations of the human model that are consistent also with parameters set on the basis of information relevant thereto.

In this manner, the model display part 310 causes a display part to display one or more human models in which the parameters relating to the shapes and sizes are set.

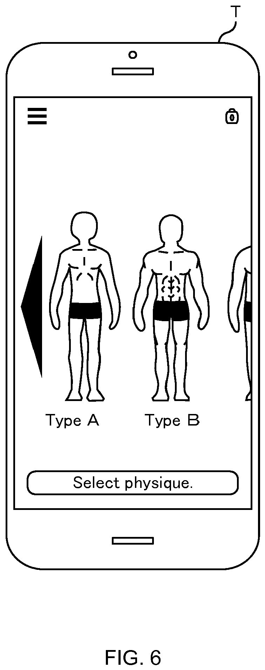

FIG. 6 is an example of a human model selection screen displayed on the communication terminal T according to the embodiment, and is a screen generated by the model display part 310 and displayed on the display part of the communication terminal T. The human model selection screen shown in FIG. 6 shows an example in which a human model with a standard body shape and a muscular human model are displayed as "Type A" and "Type B", respectively.

The user U can select a human model close to the body shape of the wearer by tapping the human model displayed on the display part of the communication terminal T. In addition, the user U can display another type of human model on the display part of the communication terminal T by swiping the display part of the communication terminal T.

The model selection reception part 321 receives a selection operation of the user U for selecting one human model from one or more human models displayed on the display part of the communication terminal T. Since the human model received by the model selection reception part 321 is the human model selected by the user U, it can be expected that the received human model is somewhat close to the body shape of the wearer. However, because the human model received by the model selection reception part 321 is the model generated on the basis of limited body shape information, it is conceivable that a modification is often required in order to make the human model even closer to the body shape of the wearer.

Therefore, the change operation reception part 322 receives a change operation from the user U for the human model selected by the user U. The parameter changing part 34 changes the parameters set for the human model in conjunction with the change operation received by the change operation reception part 322.

Here, the parameters set for the human model also include a parameter relating to the type of underwear to be worn by a human model. When the wearer is the user U himself/herself, it is easy for the user U to determine the lengths, widths, and the like of the respective parts of the human model if the user U can use the underwear that he or she usually wears as a reference.

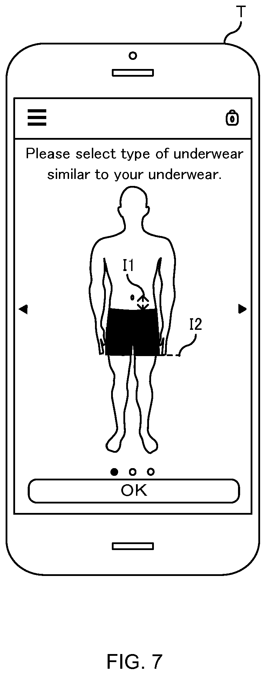

FIG. 7 is a diagram showing an example of an underwear selection screen displayed on the communication terminal T according to the embodiment. The model display part 310 generates a plurality of human models obtained by putting various types of underwear onto the human model received by the model selection reception part 321, and displays them on the communication terminal T. The user U can select the underwear to be worn by the human model by selecting the human model displayed on the display part of the communication terminal T. Further, the user U can display the human model wearing other underwear on the display part of the communication terminal T by swiping the display part of the communication terminal T. The underwear selection reception part 323 receives the user U's selection of the underwear to be worn by the human model.

The display control part 31 displays the human model wearing the underwear on the display part of the communication terminal T, and also displays, on the display part, indicators I indicating distances to the respective parts of the human model with reference to edges of the underwear. In the example shown in FIG. 7, an indicator I1 indicating a distance from an upper edge of the underwear worn by the human model to a "belly button" of the human model is displayed. Similarly, in FIG. 7, an indicator I2 indicating a distance from a lower edge of the underwear worn by the human model to an "arm tip" of the human model is also displayed. In this manner, the user U can measure the sizes of the respective parts on the basis of the underwear worn by the human model.

The human body is composed of a plurality of parts such as a head, a neck, a torso, arms, and legs. Therefore, the human model includes a plurality of parts, and parameters relating to the size are set for the respective parts. Therefore, the body part selection reception part 324 receives, from the user U, a selection operation for selecting, from among the plurality of parts of the human model, a specific part whose parameter is to be changed. This selection operation can be realized by the user U tapping the parts of the human model displayed on the display part of the communication terminal T.

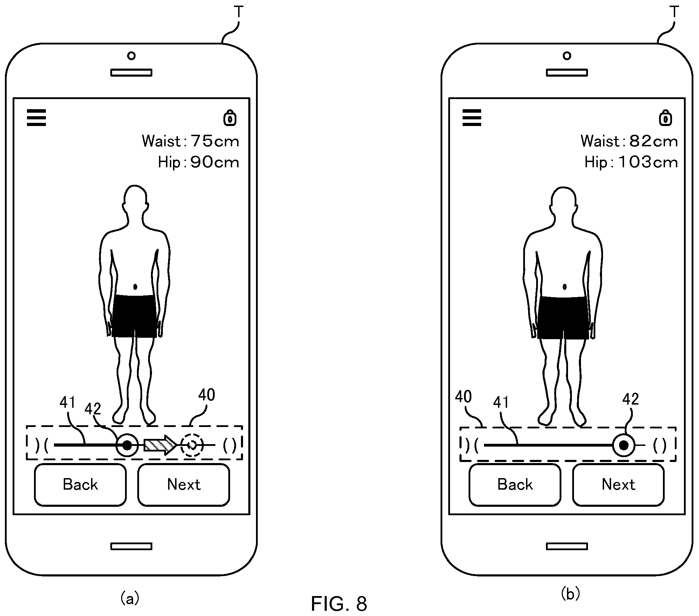

FIGS. 8A and 8B are each a diagram showing an example of a change operation screen displayed by communication terminal T according to the embodiment, and are each a diagram showing a change operation screen of parameters relating to a waist and hips set for the human model.

The parameter changing part 34 changes the parameters set for the specific part in conjunction with the change operation from the user U to the specific part selected by the user U. More specifically, first, the operation area display part 311 displays an operation area for receiving a change operation of the user U on the display part of the communication terminal T. In each of FIGS. 8A and 8B, an area surrounded by the dashed rectangle is an operation area 40.

Subsequently, the object display part 312 displays (i) a first object 41 that extends through the operation area 40, and (ii) a second object 42 that moves on the first object 41 in accordance with the operation of the user U.

In the example shown in FIG. 8A, when the user U slides the second object 42 rightward in the diagram, the change operation reception part 322 receives, as the change operation, the amount and the direction (rightward direction) of displacement of the second object 42. The parameter changing part 34 changes the parameters set for the waist and hips on the basis of the amount and the direction of displacement of the second object 42 received by the change operation reception part 322.

The model display part 310 changes the human model to be displayed on the display part of the communication terminal T on the basis of the parameters changed by the parameter changing part 34. FIG. 8B shows the human model generated by the model display part 310 in conjunction with the user U changing the second objects 42. As indicated by the hatched arrow in FIG. 8A, the user U has displaced the second object 42 in the direction of increasing the waist and the hips, so that the human model whose waist and hips are increased is displayed on the display part of the communication terminal T, as shown in FIG. 8B.

In this manner, the display control part 31 displays the human model with the changed specific part on the display part while continuously changing the shapes or sizes of the specific part of the human model for which the parameters are to be changed in conjunction with the change of the parameters by the parameter changing part 34. This allows the user U to change the parameters set for the human model with an intuitive operation. Therefore, the user U can easily modify the body shape information to be transmitted to the garment manufacturer.

It should be noted that, in addition to displacing the second object 42, the user U can also change the body shape information by performing direct operation on the parts of the human model. As shown in each of FIGS. 8A and 8B, when the specific parts are the waist and hips, the user U can change the body shape information by operating a waist part of the human model. Specifically, the waist and hips can be reduced in size by the user U pinching in the waist part of the human model. Similarly, the waist and hips can be increased in size by the user U pinching out the waist part of the human model. This allows the user U to change the parameters set for the human model with an intuitive operation.

Further, specific values of the parameters set for the specific part are displayed on the display part of the communication terminal T. For example, since each of FIGS. 8A and 8B is an example where the specific parts are the waist and the hips, sizes of the waist and hips are displayed on the display part of the communication terminal T. Thereby, the user U can perform the changing operation while grasping the specific value of the parameter.

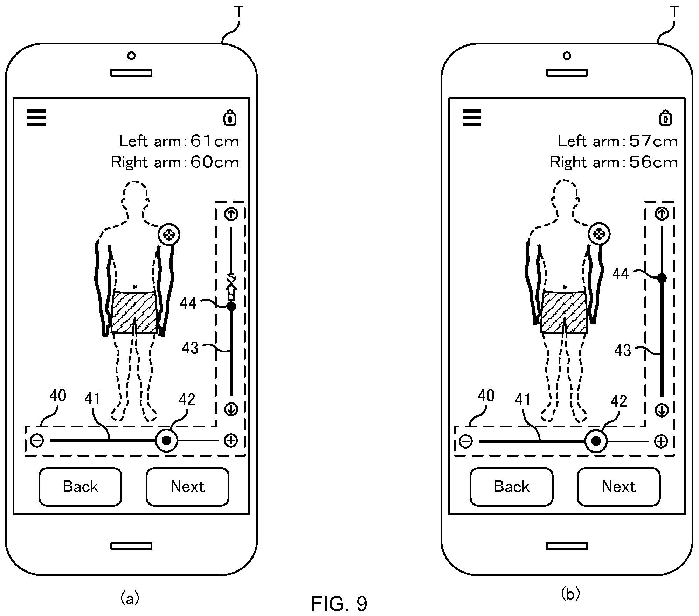

FIGS. 9A and 9B are each a diagram showing another example of the change operation screen displayed on the communication terminal T according to the embodiment, and are each a diagram showing a change operation screen of parameters relating to the arm parts set for the human model. Both FIGS. 9A and 9B show the change operation screens when the user U selects the arm parts as the specific part from among several parts of the human model. Therefore, only the arms of the human model are drawn with solid lines, and the other parts are drawn with broken lines to display the human model on the display of the communication terminal T, as shown in FIGS. 9A and 9B. This allows the user U to immediately grasp the specific part on the change operation screen at a glance.

In a similar manner as with the arm parts shown in FIGS. 9A and 9B, at least two parameters that are the length and circumference are set for many other parts such as a leg part and a neck part. For this reason, the object display part 312 displays, on the display part of the communication terminal T, (i) a third object 43 that extends through the operation area 40 in a direction different from the direction in which the first object 41 extends, and (ii) a fourth object 44 that moves on the third object 43 in accordance with the operation of the user U.

The parameter changing part 34 changes, among the parameters relating to the shapes set for the arm parts, a parameter corresponding to the direction of displacement of the second object 42 on the basis of the amount of displacement of the second object 42. Similarly, the parameter changing part 34 changes, among the parameters relating to the shapes set for the arm parts, a parameter corresponding to the direction of displacement of the fourth object 44 on the basis of the amount of displacement of the fourth object 44.

In the examples shown in FIGS. 9A and 9B, the second object 42 corresponds to the circumference of each arm of the human model, and the fourth object 44 corresponds to the length of each arm of the human model. As indicated by the hatched arrow in FIG. 9A, the user U has displaced the third object 43 upward in the diagram. As a result, as shown in FIG. 9B, the lengths of the arms of the human model are shorter than the lengths of the arms of the human model shown in FIG. 9A. In this manner, the user U can change the parameters set for the human model with an intuitive operation. Although not shown, the display control part 31 can display a change operation screen relating to a part other than the arm parts of the human model on the display part of the communication terminal T.

Although not shown, the object display part 312 may display selectable options that can be selected by the user U, for example: long, normal, or short for arms; thick, normal, or thin for legs; square, normal, or sloping for shoulders; and the like, instead of or in addition to displaying items that can be changed by the user U such as the first object 41 and the second object 42. This allows the user U to change the parameters set for the human model with a simple selection operation such as simply selecting an option.

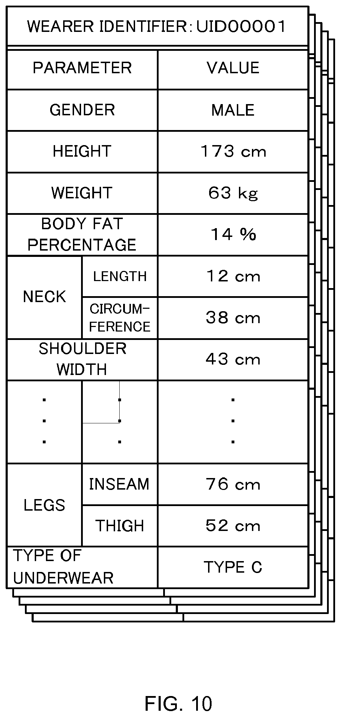

FIG. 10 is a schematic diagram showing a data structure of the parameter database according to the embodiment. The parameter database is stored in the storage part 20 of the garment order reception management apparatus 1 and is managed by the parameter setting part 33 and the parameter changing part 34.

As shown in FIG. 10, in the parameter database according to the embodiment, a plurality of parameters representing body shape information of a wearer are set for each wearer identifier for specifying each wearer. In the example shown in FIG. 10, a wearer, whose wearer identifier is UID00001, is a male who is 173 cm tall and weighs 63 kg, and the type of underwear is type C. In addition, various parameters such as the body fat percentage and shoulder width are set.

The model display part 310 can generate a human model reflecting the wearer's body shape information by referencing the parameter database on the basis of the wearer identifier. In addition, the parameter changing part 34 can record the changes by storing the changed parameters in the parameter database in conjunction with the user U's operations in the operation area 40.

In this manner, the user U can change the parameters by operating the operation objects set in the operation area, but if too much flexibility to change the parameters is given to the user U, that may instead decrease the usability of inputting body shape information.

Therefore, the object display part 312 of the display control part 31 may set a range in which the second object 42 or the fourth object 44 can move on the basis of the body shape information. For example, if the wearer's height, weight, and gender are known, it is considered that an approximate range of the body fat percentage statistically can take is determined.

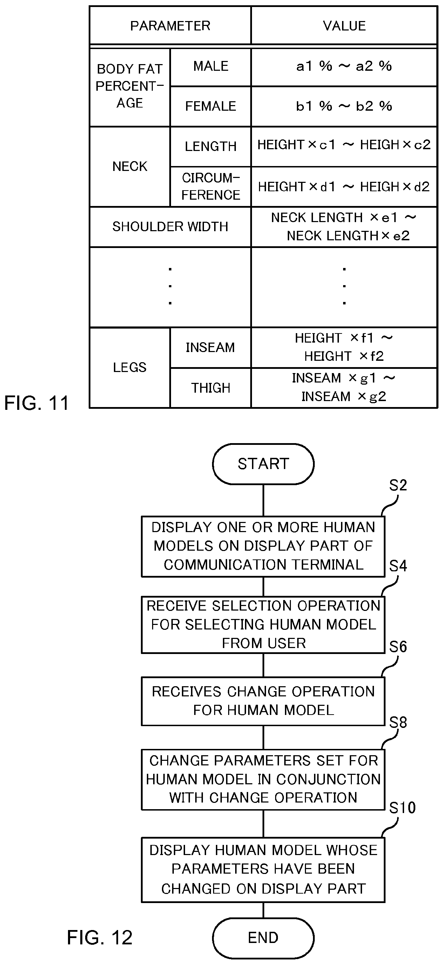

FIG. 11 is a schematic diagram showing a data structure of the movable range setting database according to the embodiment. The movable range setting database is stored in the storage part 20 of the garment order reception management apparatus 1, and is managed by the object display part 312. As shown in FIG. 11, the movable range setting database stores the upper limit value and the lower limit value of the parameters set for each part. For example, a setting range of neck length of a human model is defined by the height set for that human model. The same applies to parameters for neck circumference, shoulder width, foot length, and the like. In this manner, by limiting the range that can be set when the user U operates the object for changing the body shape information, usability at the time of parameter setting can be improved.

### <Processing of information process executed by the garment order reception management apparatus 1>

FIG. 12 is a flowchart illustrating an information process executed by the garment order reception management apparatus 1 according to the embodiment. The process in the flowchart starts upon, for example, activation of the garment order reception management apparatus 1.

The model display part 310 displays, on the display part of the communication terminal T, one or more human models in which parameters relating to the shapes and sizes are set (S2). The model selection reception part 321 receives, from a user, a selection operation for selecting one human model from one or more human models displayed on the display part (S4).

The change operation reception part 322 receives a change operation for the human model selected by the user (S6). The parameter changing part 34 changes the parameters set for the human model in conjunction with the change operation from the user (S8). The model display part 310 displays, on the display part of the communication terminal T, the human model whose parameters have been changed (S 10).

When the model display part 310 displays the human model whose parameter had been changed on the display part of the communication terminal T, the process of this flowchart ends.

### <Effects of garment order reception management apparatus 1>

As described above, according to the garment order reception management apparatus 1 of the embodiment, it is possible to improve the accuracy of the body shape information transmitted to the manufacturer by the garment orderer. In particular, the user U can select the human model similar to the body shape of the wearer by simply selecting one human model from the plurality of human models displayed on the display part of the communication terminal T.

In addition, the garment order reception management apparatus 1 changes the parameters of the sizes set for the human model in conjunction with the user U's operations on the GUI displayed in the display area of the communication terminal T. As a result, the user U can intuitively change the parameters of the human model by the simple operation.

The present invention has been described above on the basis of the exemplary embodiments. The technical scope of the present invention is not limited to the scope explained in the above embodiments, and it is obvious to those skilled in the art that various changes and modifications within the scope of the invention may be made. An aspect to which such changes and modifications are added can be included in the technical scope of the present invention is obvious from the description of the claims. Hereinafter, such Variation examples will be described.

### <Variation example 1>

Cases where the garment order reception management apparatus 1 operates as the web server and provides the GUI to the communication terminal T of the user U were explained above. Alternatively or additionally, the communication terminal T may execute a dedicated application to display the GUI on the display part of the communication terminal T. This can be realized, for example, by the communication terminal T accessing the garment order reception management apparatus 1 or a dedicated server, downloading the application, and installing it in the communication terminal T.

<Variation example 2>

Cases where the apparatus that manufactures the garment in the garment made-to-order system S is the seamless knitting machine 3 were explained above. However, the apparatus that manufactures the garment in the garment made-to-order system S is not limited to the seamless knitting machine 3. Even in cases where garments are manufactured in an automated factory and the like adopting the process of cutting out each part from fabrics and sewing them together (cut-and-sew process), the GUI provided to the communication terminal T by the garment order reception apparatus 1 according to the embodiment may be applied.

### [Description of the reference numerals]

- 1: Garment order reception management apparatus
- 2: Seamless knitting machine control apparatus
- 3: Seamless knitting machine
- 4: Plant
- 5: Stores
- 10: Communication part
- 20: Storage part
- 30: Control part
- 31: Display control part
- 32: Reception part
- 33: Parameter setting part
- 34: Parameter changing part
- 310: Model display part
- 311: Operation area display part
- 312: Object display part
- 320: Body shape information acquisition part
- 321: Model selection reception part
- 322: Change operation reception part
- 323: Underwear selection reception part
- 324: Body part selection reception part
- S: Garment made-to-order system
- T: Communication terminal

## Claims

1. A program that causes a computer to implement:
a display control function that causes a display part to display one or more human models in which parameters relating to shapes and sizes are set;
a model selection reception function that receives, from a user, a selection operation for selecting one human model from the one or more human models; and
a parameter changing function that changes the parameters set for the human model in conjunction with a change operation from the user for the selected human model.

2. The program according to claim 1, wherein each of the human models includes a plurality of parts,
the program causes the computer to further implement a part selection reception function that receives, from the user, a selection operation for selecting a specific part from the plurality of parts, and
the parameter changing function changes the parameters set for the specific part in conjunction with the change operation from the user for the selected specific part.

3. The program according to claim 2, wherein the display control function displays the human model with the changed specific part on the display part while continuously changing the shapes or sizes of the specific part of the human model in conjunction with the change of the parameters by the parameter changing function.

4. The program according to claim 2 or 3, that further causes the computer to implement
an operation area display function that causes the display part to display an operation area for receiving the change operation.

5. The program according to claim 4, that further causes the computer to implement
an object display function that causes the display part to display (i) a first object extending through the operation area and (ii) a second object moving on the first object in accordance with an operation of the user, wherein
the parameter changing function changes the parameters on the basis of an amount and a direction of displacement of the second object.

6. The program according to claim 5, that further causes the computer to implement
a body shape information reception function that receives an input of body shape information indicating a physique of a person associated with the human model, wherein
the object display function sets a range in which the second object can move on the basis of the body shape information.

7. The program according to claim 5 or 6, wherein
the object display function causes the display part to further display, in the operation area, a third object extending in a direction different from the direction in which the first object extends and a fourth object moving on the third object in accordance with the operation of the user, and
the parameter changing function changes, among the parameters relating to the shapes, (i) a parameter corresponding to the direction of displacement of the second object on the basis of the amount of displacement of the second object, and (ii) a parameter corresponding to the direction of displacement of the fourth object on the basis of the amount of displacement of the fourth object.

8. The program according to any one of claims 2 to 7, that further causes the computer to implement
an underwear selection reception function that receives a selection of underwear to be worn by the human model, wherein
the display control function causes the display part to display the human model wearing the underwear, and causes the display part to display indicators indicating distances to the respective plurality of parts with reference to edges of the underwear.

9. The program according to any one of claims 1 to 7, that further causes the computer to implement:
an image acquisition function that acquires image data including a wearer, corresponding to the human model, as a subject; and
a parameter setting function that sets the parameters for the human model on the basis of the image data.

10. A computer readable storage medium storing the program according to any one of claims 1 to 9.

11. An information processing method performed by a processor comprising the steps of:
causing a display part to display one or more human models in which parameters relating to shapes and sizes are set;
receiving, from a user, a selection operation for selecting one human model from the one or more human models; and
changing the parameters set for the human model in conjunction with a change operation from the user for the selected human model.

12. An information processing apparatus comprising:
a display control part that causes a display part to display one or more human models in which parameters relating to shapes and sizes are set;
a model selection reception part that receives, from a user, a selection operation for selecting one human model from the one or more human models; and
a parameter changing part that changes the parameters set for the human model in conjunction with a change operation from the user for the selected human model.
